# EUROPÄISCHE PATENTSCHRIFT

(11) **EP 4 041 123 B1**
(45) Veröffentlichungstag und Bekanntmachung des Hinweises auf die Patenterteilung: **01.11.2023**
(21) Anmeldenummer: 20803535.2
(22) Anmeldetag: 06.11.2020
(51) Int. Cl.: A61C 17/06, B01D 21/00, B01D 21/02, B01D 21/24

(54) **DENTALABSCHEIDER**
DENTAL SEPARATOR
SEPARATEUR DENTAL

(30) Priorität: 08.11.2019 AT 509532019
(43) Veröffentlichungstag der Anmeldung: 17.08.2022
(73) Patentinhaber: Pregenzer, Bruno, 6414 Mieming (AT)
(72) Erfinder: Pregenzer, Bruno, 6414 Mieming (AT)
(74) Vertreter: Laufhütte, Dieter
(86) Internationale Anmeldenummer: PCT/EP2020/081276
(87) Internationale Veröffentlichungsnummer: WO 2021/089774

(56) Entgegenhaltungen:
- WO-A1-86/03669
- DE-A1- 3 542 134
- DE-U1- 8 702 001
- US-B1- 6 276 936

## Beschreibung

Die Erfindung betrifft einen Dentalabscheider für den zahnärztlichen Behandlungsplatz.

Bei einem Dentalabscheider handelt es sich um ein in der Regel kompaktes Bauteil, das an zahnärztlichen Behandlungsplätzen eingesetzt wird, um Feststoffpartikel aus dem Luft-Flüssigkeits-Gemisch abzutrennen, das vom Mund eines Patienten abgesaugt wird. Die Funktion ist dabei nicht auf die Abscheidung von Amalgampartikel beschränkt, sondern betrifft auch die Abscheidung von Kunststoffpartikeln, Bicarbonatpartikeln und weiteren Feststoffen aus der Zahnbehandlung.

Eine bekannte Konstruktion eines Dentalabscheiders wird beispielsweise in der WO 2000/071050 A1 vorgestellt.

Die US 6 276 936 B1 offenbart einen Dentalabscheider nach dem Oberbegriff des Anspruchs 1.

Aufgabe der Erfindung ist es, einen Dentalabscheider bereitzustellen, der eine verbesserte Trennung zwischen Luft und partikelbeladener Flüssigkeit erreicht.

Vor diesem Hintergrund betrifft die Erfindung einen Dentalabscheider mit einem Gehäuse, in dessen oberen Bereich eine Entwässerungszone zur Abtrennung von partikelhaltiger Flüssigkeit aus einem mit der Flüssigkeit beladenen Luftstrom ausgebildet ist, wobei das Gehäuse einen Einlass für den beladenen Luftstrom aufweist, der tangential in die Entwässerungszone mündet, und im Gehäuse unterhalb der Entwässerungszone eine Abscheidezone zur Abtrennung der Partikel aus der partikelhaltigen Flüssigkeit ausgebildet ist, die von der Entwässerungszone in die Abscheidezone sinkt. Erfindungsgemäß ist vorgesehen, dass die Entwässerungszone eine gekrümmte Strömungsbahn umfasst, die an ihrer Unterseite durch einen Kranz an Prallblättchen begrenzt ist.

Das Gehäuse ist vorzugsweise im Querschnitt rund ausgebildet und verläuft entlang einer in der Einbausituation im Wesentlichen vertikalen Achse. Der Einlass befindet sich oben am Gehäuse. Ein Auslass bzw. Auslässe für den entwässerten Luftstrom bzw. die letztlich partikelfreie Flüssigkeit befinden sich unten am Gehäuse.

Das Gehäuse kann aus mehreren Teilen bestehen. In einer Ausführungsvariante kann das Gehäuse einen unteren Gehäuseteil und einen darauf aufgesetzten oberen Gehäuseteil umfassen, wobei bevorzugt ist, dass das untere Gehäuseteil an seinem Boden geschlossen und nach oben hin offen ist, und dass das obere Gehäuseteil nach oben anhand eines Deckels verschlossen ist und einen Boden aufweist, der den Innenraum des Gehäuses in eine Entwässerungszone und eine Abscheidezone aufteilt. Der Einlass befindet sich vorzugsweise am oberen Gehäuseteil. In einer anderen Ausführungsvariante kann das Gehäuse eine zentrale Trommel aufweisen, die oben und unten anhand von Einlass- bzw. Auslassdeckeln verschlossen ist. Der Einlass befindet sich vorzugsweise am Einlassdeckel. Die Entwässerungszone ist im Bereich des Einlassdeckels bzw. im obersten Bereich der Trommel angeordnet.

Der Einlass mündet vorzugsweise tangential in die Strömungsbahn. In einer Ausführungsvariante kann die Strömungsbahn schneckenförmig um eine fast volle Umdrehung nach innen laufen, bis sie an einem Auslass endet. In einer anderen Ausführungsvariante kann die Strömungsbahn so ausgebildet sein, dass der beladene Luftstrom nach Eintritt in die Entwässerungszone einen wendelförmigen Strömungsverlauf um den Trennmantel nimmt und dabei innerhalb der Entwässerungszone absinkt.

Vorzugsweise sind die Prallblättchen gleichmäßig und alle auf derselben Höhe über die Erstreckung des Strömungskanals verteilt und dabei im spitzen Winkel von beispielsweise 10°-40° oder vorzugsweise 20°-30° in Strömungsrichtung nach oben aus der Horizontalen geneigt. Auch eine Krümmung der Prallblättchen in Strömungsrichtung kann vorgesehen sein. Der in der Draufsicht erkennbare Abstand zwischen den Vorderkanten und Hinterkanten aufeinanderfolgender Prallblättchen ist vorzugsweise kleiner als die halbe umfängliche Erstreckung und vorzugsweise kleiner als ein Viertel der umfänglichen Erstreckung der Prallblättchen ist. Weiter vorzugsweise fluchten die Vorderkanten und Hinterkanten aufeinanderfolgender Prallblättchen oder die Prallblättchen überlappen sogar.

Durch eine Ausbildung entsprechend einer oder mehrerer der obenstehend beschriebenen bevorzugten Ausgestaltungen ergibt sich insgesamt eine treppenförmige Kontur der Prallblättchen. Diese Kontur bewirkt, dass der Luftstrom in der Strömungsbahn durch die Prallblättchen kaum verwirbelt wird und dass zudem eine Luftbewegung in der Abscheidezone unterhalb des Prallblättchenkranzes effektiv verhindert wird. So kann eine Agitation der dort gesammelten Flüssigkeit vermieden und eine Sedimentationsabscheidung der in der Flüssigkeit enthaltenen Partikel begünstigt werden. Trotzdem kommt es zu einer effektiven Entwässerung des Luftstroms.

In einer Ausführungsvariante der Erfindung können die Prallblättchen radial von einer gekrümmten Wand innerhalb des Gehäuses abstehen, welche die Innenseite der Strömungsbahn definiert.

Erfindungsgemäß sind an einer Wand, welche die äußere Begrenzung des Strömungskanals bildet und bei der es sich um die Wand eines im Gehäuse eingesetzten Einsatzes oder eine Wand des Gehäusemantels handeln kann, stegartige Leitvorsprünge vorgesehen, die in den Strömungskanal ragen. Die Leitvorsprünge können die Gestalt von im spitzen Winkel von beispielsweise zwischen 5° und 30° nach hinten aus der Vertikalen geneigten und leicht konvex gekrümmten Stegen haben.

Die unteren Enden der Leitvorsprünge können in einer Ausführungsform an der Oberseite eines korrespondierenden Prallblättchens anstehen. Vorzugsweise ist dabei vorgesehen, dass zwischen der Außenkante der Prallblättchen und der Innenoberfläche einer Wand, welche die äußere Begrenzung des Strömungskanals bildet, kann in einer Ausführungsvariante ein Spalt ausgebildet ist. Der Spalt sollte sich in Abflussrichtung, also gegen die Strömungsrichtung an den Berührungspunkt anschließen, sodass am Leitvorsprung abgeschiedenes Wasser nach unten abrinnen kann.

Die Begrenzungswände des Strömungskanals nebst Prallkonturen, also Prallblättchen und gegebenenfalls Leitvorsprünge, können an einem Einsatz ausgebildet sein, der im Gehäuse und vorzugsweise im oberen Gehäuseteil aufgenommen ist. Der Einsatz kann insgesamt als Spritzgussteil gefertigt sein.

Unterhalb des Kranzes an Prallblättchen kann, gegebenenfalls noch im Bereich des oberen Gehäuseteils, eine Auffangzone in Form beispielsweise einer um die Achse des Dentalabscheiders gekrümmte Rinne aufweisen, um das an den Prallkonturen aus dem Luftstrom abgeschiedene Wasser aufzufangen. Aus dieser Auffangzone kann das Wasser durch beispielsweise ein Fallrohr in die Abscheidezone geleitet werden.

Im Bodenbereich des Gehäuses und gegebenenfalls des unteren Gehäuseteils ist eine Sedimentationszone ausgebildet, die nach oben hin anhand eines Filters in Form mindestens eines Siebbodens und gegebenenfalls einer oder mehrerer Schüttungen abgegrenzt ist, wobei die Siebböden und gegebenenfalls Schüttungen Schwebeteilchen aus dem Wasser abreichern. Oberhalb des Filtermediums kann ein Absaugbereich ausgebildet sein.

In einer Ausführungsform weist das Gehäuse ferner einen Auslass für den behandelten Luftstrom auf, der am distalen Ende der gekrümmten Strömungsbahn von der Entwässerungszone nach außen führt. Der Auslass ist entsprechend im oberen Bereich des Gehäuses, beispielsweise am oberen Gehäuseteil angeordnet.

Innerhalb des Auslasses kann eine Venturi-Düse mit einer Verengung ausgebildet sein, in welche ein aus dem Absaugbereich der Abscheidezone führendes Saugrohr mündet. Durch den Luftstrom fungiert der so gestaltete Auslass als Luftstrahlpumpe, anhand derer die gereinigte Flüssigkeit aus der Entwässerungszone gesogen und gemeinsam mit dem zuvor entwässerten Luftstrom nach außen geleitet werden kann.

In einer alternativen Ausführungsform befindet sich im Inneren des Gehäuses ein Einsetzteil mit einem rohrförmigen Trennmantel, der sowohl die Entwässerungszone als auch die Abscheidezone in einen äußeren und einen inneren Bereich trennt. Bei dem Einsatzteil kann es sich um ein Spritzgussteil handeln, welches die Prallblättchen umfasst.

Die Strömungsbahn ist in dieser alternativen Ausführungsform vorzugsweise so ausgebildet, dass der beladene Luftstrom nach Eintritt in die Entwässerungszone einen wendelförmigen Strömungsverlauf um den Trennmantel nimmt und dabei innerhalb der Entwässerungszone absinkt. Der Trennmantel setzt sich in einer Ausführungsvariante der Erfindung aus einem in das Gehäuse eingesetzten rohrförmigen Einsatz und einem von der Gehäusedecke nach unten stehenden Ringsteg zusammen. Der Ringsteg ist vorzugsweise am Einlassdeckel des Gehäuses angeformt. Insbesondere kann dabei zwischen der Oberkante des Mantels des rohrförmigen Einsatzes und der Unterkante des Ringstegs ein Spalt ausgebildet sein, der sich über zumindest einen Teil des Umfangs des Trennmantels erstreckt. Durch den Spalt kann die nach Zirkulation in der ringförmigen Strömungsbahn zumindest teilentwässerte Luft in den inneren Bereich der Entwässerungszone eindringen.

In einer Variante der in den vorstehenden Absätzen beschriebenen Ausführungsform ist vorgesehen, dass zumindest ein Teil der Prallblättchen an der Unterseite einen vertikal oder im Winkel zur Vertikalen nach unten ragenden Steg aufweist. In einer weiteren Ausführungsform ist vorgesehen, dass oberhalb des Kranzes an Prallblättchen ferner um den Umfang des Trennmantels verteilte Pralltafeln in die Strömungsbahn ragen, wobei die Pralltafeln vorzugsweise vertikal verlaufen und in Strömungsrichtung zur tangentialen Richtung hingeneigt sind. Die Pralltafeln stellen zusätzliche Prallkonturen zur Entwässerung des beladenen Luftstroms dar. Die Prallblättchen und/oder die Pralltafeln können in der im Rahmen der letzten beiden Absätze beschriebenen Ausführungsform beispielsweise an der Außenseite des Trennmantels angeformt sein.

Weitere Einzelheiten und Vorteile der Erfindung ergeben sich aus dem nachfolgend anhand der Figuren beschriebenen Ausführungsbeispiel. In den Figuren zeigen:
- Figur 1:: eine Explosionsansicht eines Dentalabscheiders gemäß einer Ausführungsform der Erfindung;
- Figur 2:: einen Längsschnitt durch den Dentalabscheider;
- Figur 3:: eine perspektivische Außenansicht des Dentalabscheiders;
- Figur 4:: eine Ansicht des Einlaufdeckels des Dentalabscheiders von schräg oben;
- Figur 5:: eine Ansicht des Einlaufdeckels von schräg unten;
- Figur 6:: eine Teilschnittansicht des Dentalabscheiders, in welcher der obere Teil des Trommelmantels sowie die seitliche Verkleidung des Einlaufdeckels weggeschnitten sind;
- Figur 7:: eine perspektivische Ansicht des Dentalabscheiders mit auf Höhe des Einlaufs quer abgeschnittenem Einlaufdeckel;
- Figur 8:: eine perspektivische Ansicht des Dentalabscheiders mit auf Höhe der Oberkante des Trommelmantels quer abgeschnittenem Einlaufdeckel;
- Figur 9:: eine Explosionsansicht eines Dentalabscheiders gemäß einer weiteren Ausführungsform der Erfindung;
- Figur 10:: einen Längsschnitt durch diesen weiteren Dentalabscheider;
- Figur 11:: eine Ansicht des oberen Gehäuseteils dieses Dentalabscheiders von schräg oben mit abgenommenem Deckel und fehlendem Luftleiteinsatz; und
- Figur 12:: eine Ansicht des isolierten Luftleiteinsatzes.

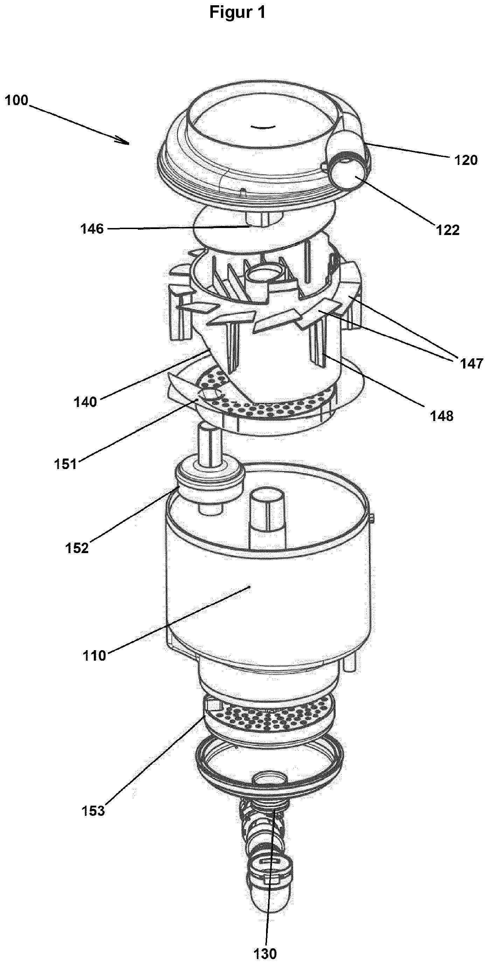

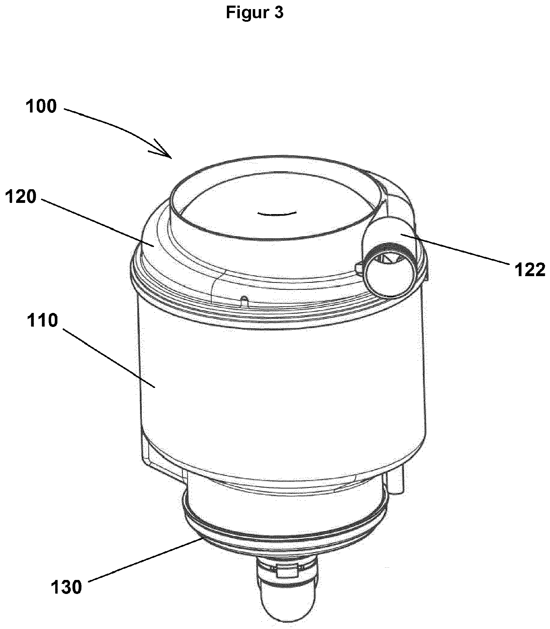

Der in den Figuren 1 bis 8 dargestellte erfindungsgemäße Abscheider 100 umfasst ein Gehäuse aus Kunststoff, welches eine im Querschnitt runde Trommel 110 aufweist, deren Oberseite anhand eines Einlaufdeckels 120 und deren Unterseite anhand eines Auslaufdeckels 130 verschlossen ist. Das Gehäuse umschließt einen mehrteiligen Innenraum, wobei im Bereich des nach oben ausgewölbten Einlaufdeckels 120 ein Entwässerungsraum 121 definiert ist, an den sich unten ein im Bereich der Trommel 110 definierter und nachfolgend näher beschriebener Sedimentationsbereich anschließt.

Das vom Speichelsauger stammende Luft-Flüssigkeits-Gemisch dringt über den tangential am Einlaufdeckel 120 angeordneten Einlassstutzen 122 in den Entwässerungsraum 121 ein und erfährt dort einen Strömungsverlauf, der in weiterer Folge noch konkreter beschrieben wird. Dabei werden durch Zentrifugalkräfte und Kollisionen mit Prallflächen die partikelhaltige Flüssigkeit, also das partikelhaltige Wasser-Speichel-Gemisch aus dem Strom abgeschieden. Der entwässerte Luftstrom strömt schließlich durch den zentralen Exit-Schacht 191 vom Entwässerungsraum 121 zu einem Luftabzugsanschluss am Auslaufdeckel 130.

Die im Entwässerungsraum 121 aus dem Luft-Flüssigkeits-Gemisch abgetrennte partikelhaltige Flüssigkeit fließt dagegen in einem mantelnahen Sinkbereich 111 bis in eine erste Sedimentationszone 112 am Boden der Trommel 110.

In die Trommel 110 ist ein rohrförmiger Einsatz 140 eingesetzt, dessen Mantelfläche 141 eine zentrale Steigzone 113 gegenüber dem mantelnahen Sinkbereich 111 abtrennt. In der Steigzone 113 steigt die Flüssigkeit ausgehend von der ersten Sedimentationszone 112 und angetrieben durch die im Sinkbereich 111 nachkommende Flüssigkeit nach oben und fließt letztlich durch eine Öffnung 114 auf eine am Einsatz 140 ausgebildete horizontale Rippenplatte 142.

In der Steigzone 113 ist eine Filterpatrone 151 eingesetzt, welche die Flüssigkeit auf ihrem Weg zur Öffnung 114 durchlaufen muss.

Eine V-förmige Kerbe 145 im Mantel 141 des Einsatzes 140, die von unten nach oben läuft, erhöht die Kapazität des Dentalabscheiders, indem der Strömungsweg für die Flüssigkeit durch ein Ansteigen des Sediments in der ersten Sedimentationszone 112 bis zur Unterkante des Mantels 141 nicht blockiert wird.

An der Rippenplatte 142 ist eine Kaskade mehrerer vertikaler Rippen 143 angeordnet, die mehrere gestaffelte Sedimentationsvertiefungen 144 begrenzen. Auf der zur Öffnung 114 gegenüberliegenden Seite der Rippenplatte mündet eine Eingangsöffnung eines Überlaufrohres 192, das in den Auslaufdeckel 130 führt. Die durch die Öffnung 114 auf die Rippenplatte 142 gelangende Flüssigkeit durchläuft nach und nach die Sedimentationsvertiefungen 144, bevor sie den Abscheider durch das Überlaufrohr 192 verlässt.

Im Überlaufrohr 192 und auch im Auslaufdeckel 130 sind im Strömungsweg der Flüssigkeit noch weitere Filterpatronen 152 und 153 angeordnet.

An der Oberseite des Einsatzes 140 umfasst dieser zur Abdeckung der Rippenplatte 142 bzw. der Steigzone 113 gegenüber dem Entwässerungsraum 121 eine schräge Platte 146 zur Sammlung von eventuell noch in diesem Bereich aus der Luft abgeschiedener Flüssigkeit und zu deren Ableitung in den Sinkbereich 111.

Grobe Partikel werden größtenteils durch Sedimentation bereits in der ersten Sedimentationszone 112 abgelagert.

Die Filterpatrone 152 kann sodann eine Füllung wie beispielsweise feine Metallfäden oder eine Schüttung aufweisen, die gelöste Quecksilber-Ionen und/oder partikelförmige Amalgam-Legierungen bindet. Es können auch mehrere Filterböden mit unterschiedlichen Schüttungen bzw. Füllungen in der Filterpatrone 152 vorgesehen sein, beispielsweise Aktivkohle, Zinkspäne, grobporiger Zeolith, oder dergleichen. Im Falle mehrerer Böden ist es sinnvoll, größere Siebe bzw. Schüttungen unten vorzusehen und nach oben hin mit der Korngröße bzw. den Sieböffnungen immer kleiner zu werden.

Verbleibende feine Feststoffe werden in den Sedimentationsvertiefungen 144 der Rippenplatte 142 abgeschieden. Eine letzte Reinigung anhand von beispielsweise Ionenaustauschern oder Aktivkohle kann in den Filterpatronen 152 und 153 stattfinden.

Eine treibende Kraft für den Abzug von Flüssigkeit durch das Überlaufrohr 192 ist ein Unterdruck, der anhand einer mit dem aus dem Exit-Schacht 191 kommenden Luftstrom durchströmten Venturi-Düse im Auslaufdeckel 130 erzeugt wird. Der Unterdruck der Venturi-Düse führt allerdings aufgrund der Konstruktion des Dentalabscheiders mit dem Einsatz 140, der Steigzone 113, der Filterpatrone 152, der Rippenplatte 142 und der Abdeckscheibe 146 nicht zu einer Agitation der Flüssigkeit in der Sedimentationszone 112, sodass die Sedimentation dort nicht gestört wird.

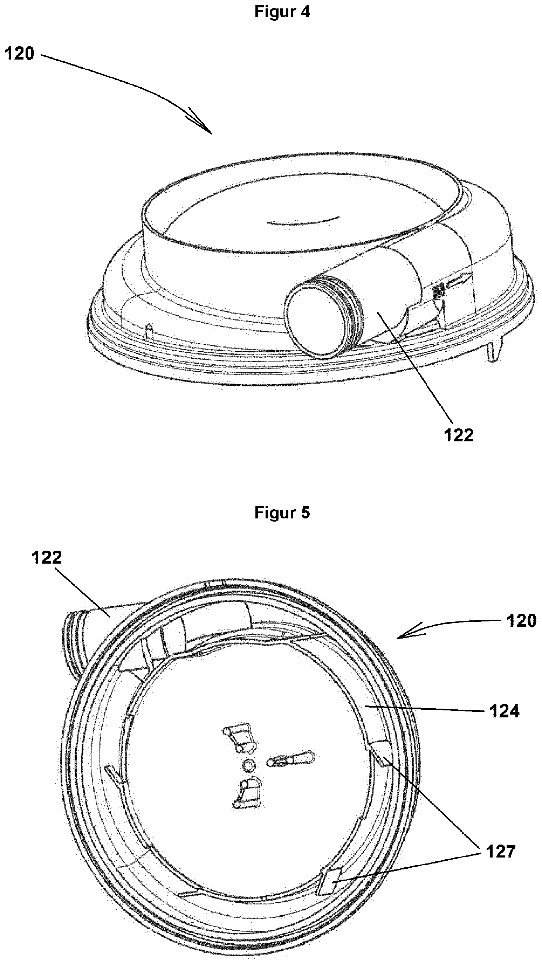

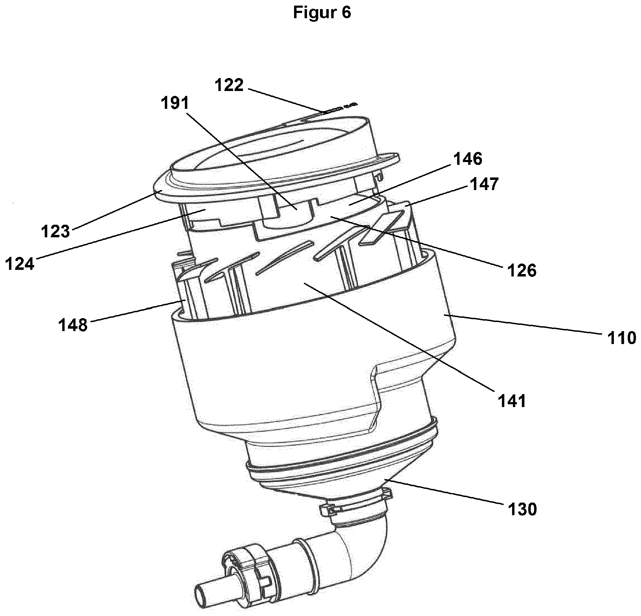

Wie dies insbesondere in Figuren 4 und 6 erkennbar ist, schließt sich an den tangentialen Einlassstutzen 122 eine wendelförmige Leitfläche 123 an, die gemeinsam mit einem ringförmigen Steg 124 im Entwässerungsraum 121 und dem Außenmantel des Einlaufdeckels 120 eine nach unten offene Strömungsbahn 125 definiert, in dem sich das Luft-Flüssigkeits-Gemisch wendelförmig um die Außenfläche des Stegs 124 nach unten windet.

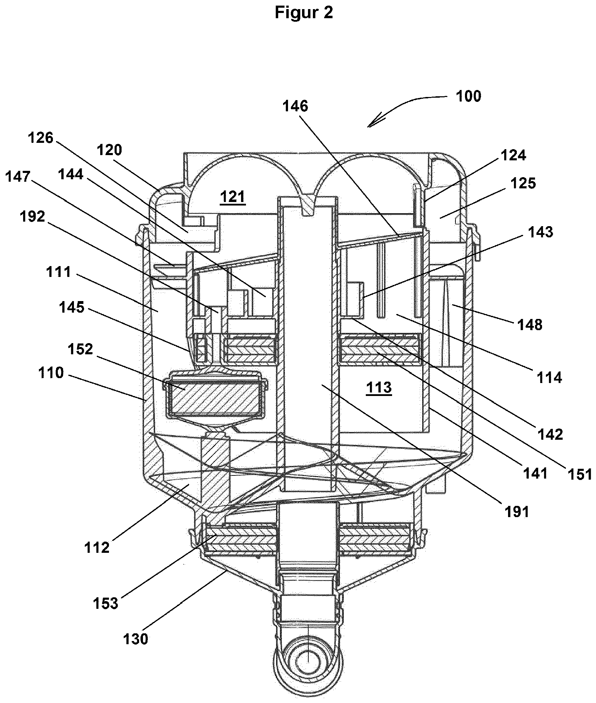

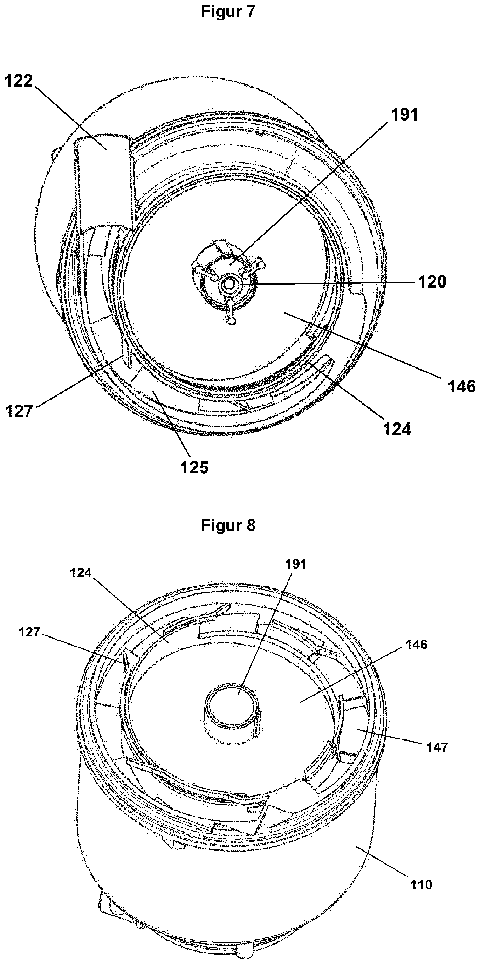

Das vom Einlaufdeckel 120 definierte Dach des mittleren Bereichs des Entwässerungsraums 121 ist kuppelförmig und läuft in der Achse des Exit-Schachts 191 in einem spitzen Fortsatz zusammen, wie insbesondere in Figur 2 zu erkennen ist. Die geschnittene Spitze des Fortsatzes des kuppelförmigen Dachs des Einlaufdeckels 120 ist auch in Figur 7 zu erkennen.

Der Steg 124 hat denselben Abstand von der Mittelachse des Dentalabscheiders wie der Mantel 141 des Einsatzes 140 und setzt den Verlauf des Einsatz-Mantels 141 im Entwässerungsraum 121 fort, wobei zwischen der Oberkante des Mantels 141 und der Unterkante des Stegs 124 ein Spalt 126 freigelassen ist, durch den die zumindest größtenteils entwässerte Luft aus der Strömungsbahn 125 in den mittleren Bereich des Entwässerungsraums 121 vordringen kann, der unten durch die schräge Scheibe 146 begrenzt wird und in dessen Zentrum sich die Eingangsöffnung des Exit-Schachts 191 befindet, in dessen Richtung die Luft im mittleren Bereich auf spiralförmiger Bahn strömt.

Der Spalt 126 ist nicht überall gleich breit, sondern es verteilen sich über den Umfang des Mantels 141 bzw. Stegs 124 Bereiche unterschiedlicher Spaltbreite und auch ein Bereich, in dem der Spalt geschlossen ist (vgl. etwa Figur 2). Die unterschiedlichen Spaltbreiten erlauben einen definierten Verlauf des Lufteintritts in den mittleren Bereich des Entwässerungsraums 121 und orientieren sich an der Lage des Einlassstutzens 122 und der Stellung der schrägen Scheibe 146. Konkret ist, wie in Figur 2 erkennbar, am oberen Scheitel der schrägen Scheibe 146 der Spalt 126 geschlossen und am unteren Scheitel der schrägen Scheibe 146 der Spalt 126 weit offen. Dies unterstützt eine möglichst vollständige Entwässerung im mittleren Bereich des Entwässerungsraums 121 und erlaubt einen Rückfluss von im mittleren Bereich ausgeschiedenem Wasser in die Strömungsbahn 125 bzw. den Sinkbereich 111.

An der Außenfläche des Stegs 124 befinden sich gleichmäßig über den Umfang verteilte Pralltafeln 127, die in die Strömungsbahn 125 stehen und der Entwässerung dienen. Die Pralltafeln 127 verlaufen vertikal und sind in Strömungsrichtung stark zur tangentialen Richtung hingeneigt, um den Luftstrom nicht über Gebühr zu verwirbeln.

An seiner offenen Unterseite geht die Strömungsbahn 125 in den Sinkbereich 111 der Trommel 110 über. Im Übergangsbereich befindet sich ein Kranz an radial von der Außenseite des Mantels 141 abstehenden Blättchen 147, die gleichmäßig und alle auf derselben Höhe über den Umfang des Mantels 141 verteilt sind.

Die Blättchen 147 sind, wie insbesondere in Figur 6 zu erkennen ist, im spitzen Winkel von etwa 20°-30° so aus der Horizontalen geneigt, dass sie leicht angestellte Prallkonturen für den in der Strömungsbahn zirkulierenden Luftstrom bilden, und sind leicht in die Strömungsrichtung gekrümmt. Da die Blättchen 147 zudem in geringem Abstand zueinanderstehen, wobei die Vorderkante jedes Blättchens 147 an derselben Umfangsposition wie die Hinterkante des darauffolgenden Blättchens 147 endet, ergibt sich eine treppenförmige Kontur.

Diese Kontur bewirkt, dass der Luftstrom in der Strömungsbahn 125 durch die Blättchen 147 kaum verwirbelt wird und dass zudem eine Luftbewegung unterhalb des Blättchenkranzes, also im Sinkbereich 111 effektiv verhindert wird. Dies verhindert auch eine Agitation der Flüssigkeit in der ersten Sedimentationszone 112 und begünstigt die Sedimentation. Trotzdem kommt es zu einer effektiven Entwässerung des Luftstroms.

Entsprechend der Erfindung stehen die zuvor beschriebenen Pralltafeln 127 mit den benachbarten Blättchen 147 in einer Wirkverbindung. Sie beeinflussen die einlaufende Mehrphasenströmung dahingehend, dass sie gleichmäßiger auf die Blättchen geleitet wird. Hierdurch wird der Abscheidegrad wesentlich gesteigert.

Zur möglichst vollständigen Unterbindung einer Luftbewegung im Sinkbereich 111 ist an der Unterseite jedes zweiten Blättchens 147 auch noch ein vertikaler Steg 148 angeformt. Dieser unterstützt zudem den Abfluss der ausgeschiedenen Flüssigkeit.

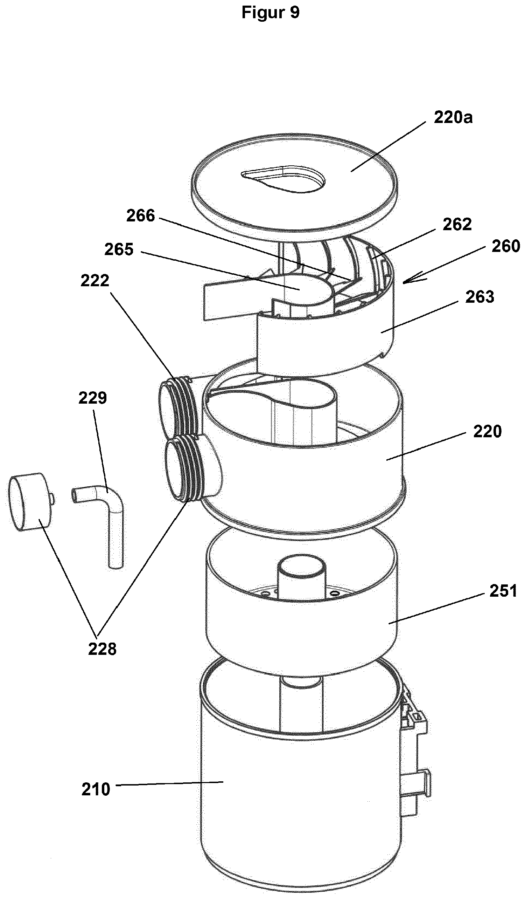

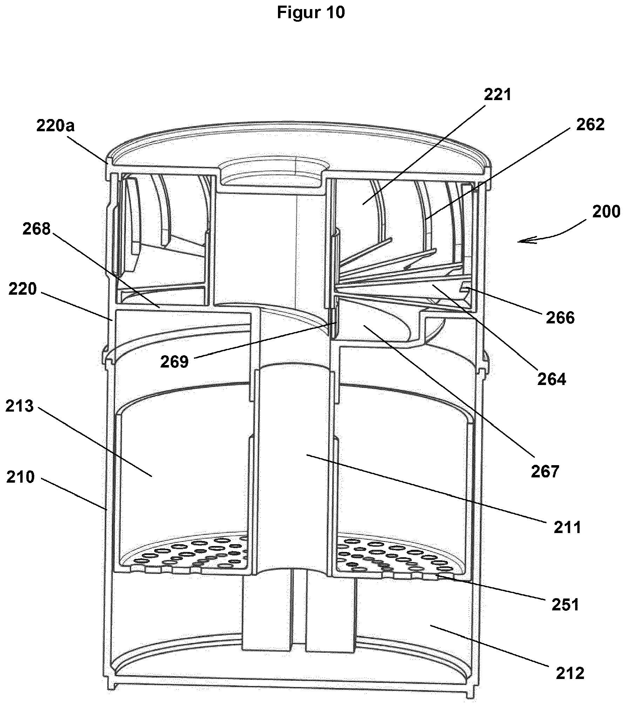

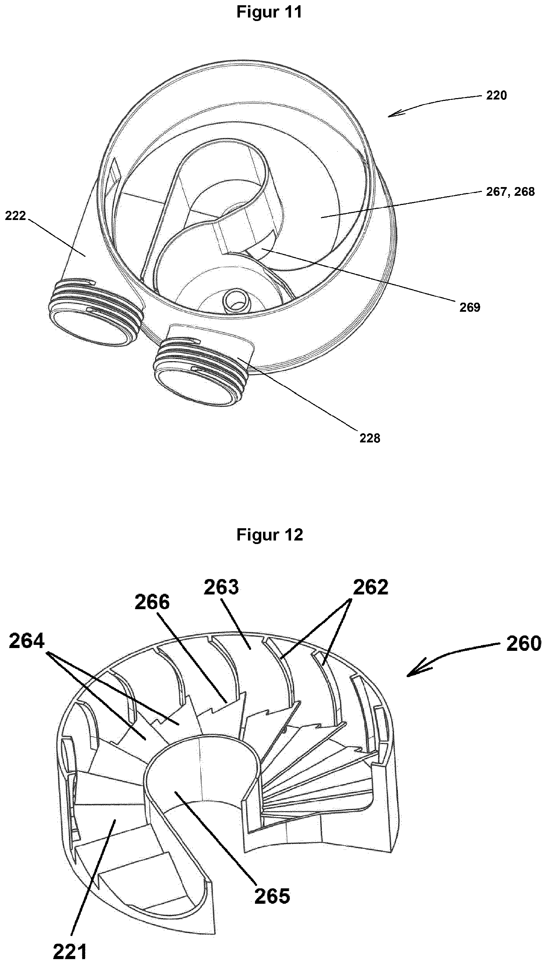

Der in den Figuren 9 bis 12 dargestellte erfindungsgemäße Abscheider 200 betrifft eine bevorzugte Ausführungsform.

Auch dieser Abscheider 200 umfasst ein im Querschnitt rundes Gehäuse aus Kunststoff, welches sich in diesem Fall aus einem unteren Gehäuseteil 210 und einem oberen Gehäuseteil 220 zusammensetzt. Das untere Gehäuseteil 210 ist an seinem Boden geschlossen und nach oben hin offen. Das obere Gehäuseteil 220 ist ebenfalls nach oben offen, wobei es oben anhand eines Deckels 220a verschlossen ist. Der Boden 268 des oberen Gehäuseteils 220, der den Innenraum des oberen Gehäuseteils 220 vom Innenraum des unteren Gehäuseteils 210 abgrenzt, wird in weiterer Folge noch näher beschreiben.

Das Gehäuse umschließt einen mehrteiligen Innenraum, wobei im Bereich des oberen Gehäuseteils 220 ein Luftleiteinsatz 260 eingesetzt ist, der einen schneckenförmig um eine fast volle Umdrehung nach innen laufenden Entwässerungsraum 221 definiert. Im Bereich des unteren Gehäuseteils 210 schließt sich an den Luftleiteinsatz 260 ein nachfolgend näher beschriebener Sedimentationsbereich an.

Das vom Speichelsauger stammende Luft-Flüssigkeits-Gemisch wird über den am oberen Gehäuseteil 220 angeordneten Einlassstutzen 222 tangential in den Entwässerungsraum 221 eingeleitet und ringsum über eine besondere kaskadenförmige Einheit geführt, die in weiterer Folge noch näher beschrieben werden wird. Dabei wird durch Zentrifugalkräfte und Kollisionen des Luftstroms mit Prallflächen die partikelhaltige Flüssigkeit, also das partikelhaltige Wasser-Speichel-Gemisch aus dem Strom abgeschieden.

Die Prallflächen umfassen einerseits stegartige Leitvorsprünge 262 an der äußeren Mantelfläche 263 des Luftleiteinsatzes 260, die den schneckenförmigen Entwässerungsraum 221 nach außen hin begrenzt. Die Leitvorsprünge 262 haben die Gestalt von leicht aus der Vertikalen geneigten und leicht konvex gekrümmten Stegen, wobei die Neigung mit Bezug auf die Strömungsrichtung so ist, dass die Stege unten etwas nach hinten geneigt sind, und die Krümmung mit Bezug auf die Strömungsrichtung konvex ist.

Ferner umfassen die Prallvorsprünge einen Kranz an radialen Blättchen 264, die sich von der inneren Mantelfläche 265 des Luftleiteinsatzes 260, die den schneckenförmigen Entwässerungsraum 221 nach innen hin begrenzt, bis zur äußeren Mantelfläche 263 erstrecken und den Entwässerungsraum 221 nach unten hin begrenzen. Die Blättchen 264 sind gleichmäßig und alle auf derselben Höhe über den Umfang der inneren Mantelfläche 265 bzw. über die Erstreckung des schneckenförmigen Entwässerungsraums 221 verteilt. Die Blättchen 264 sind im spitzen Winkel von etwa 20°-30° so aus der Horizontalen geneigt, dass sie leicht angestellte Prallkonturen für den Luftstrom im Entwässerungsraum 221 bilden. Da die Blättchen 264 zudem in geringem Abstand zueinanderstehen, wobei die Vorderkante jedes Blättchens 264 die Hinterkante des darauffolgenden Blättchens 264 endet, ergibt sich eine treppenförmige Kontur.

Die unteren Enden der Leitvorsprünge 262 stehen an der Oberfläche eines korrespondierenden Blättchens 264 an, wobei sich an den Berührungspunkt ein zwischen dem Blättchen 264 und dem äußeren Mantel 263 ausgebildeter Spalt 266 anschließt, durch den am Leitvorsprung 262 abgeschiedenes Wasser nach unten aus dem Entwässerungsraum 221 abrinnen kann. Das Wasser wird durch die Kontur der Leitvorsprünge 262 in diesen Spalt 266 hineingeleitet.

Auch durch die Zwischenräume zwischen den Blättchen 264 bzw. Treppenstufen kann Wasser aus dem Entwässerungsraum 221 nach unten austreten.

Der entwässerte Luftstrom wird am Ende des Entwässerungsraums 221 durch einen Auslassstutzen 228 geleitet, wobei im Auslassstutzen 228 eine Verengung angeordnet ist, an der die austretende Luft aufgrund des Venturi-Effekts einen Unterdruck erzeugt. In diesen Unterdruckbereich mündet ein in den unteren Gehäuseteil eintauchendes Saugrohr 229 zum Ansaugen von gereinigtem Wasser. Dieser Vorgang wird später noch beschrieben.

Die im Entwässerungsraum 221 aus dem Luft-Flüssigkeits-Gemisch abgetrennte partikelhaltige Flüssigkeit fließt an einer leicht geneigten Bahn 267 am Boden 268 des oberen Gehäuseteils 220 durch eine Öffnung 269 in ein zentral im unteren Gehäuseteil 210 angeordnetes Fallrohr 211 bis in eine erste Sedimentationszone 212 am Boden des unteren Gehäuseteils 210.

Ausgehend von dieser ersten Sedimentationszone 212 steigt die Flüssigkeit, angetrieben durch die im Fallrohr 211 nachkommende Flüssigkeit, in einer ringförmigen Steigzone 213, die nach außen hin durch den Mantel des unteren Gehäuseteils 210 und nach innen hin durch das Fallrohr 211 begrenzt ist, nach oben. In der Steigzone 213 ist ein Siebboden 251 eingesetzt, welchen die Flüssigkeit auf ihrem Weg nach oben durchläuft. Auf dem Siebboden 251 sind verschiedene Schüttungen aufgebracht, die in den Figuren nicht dargestellt sind. Einzelne Schüttungen können jeweils auch über Böden voneinander getrennt sein. Das Wasser steigt mit den Partikeln in diese Schüttung bzw. Schüttungen hinein wobei die schwereren Partikel bereits in der ersten Sedimentationszone 212 absedimentieren und die Schwebepartikel in den Schüttungen verbleiben.

Zu den Schüttungen ist anzugeben, dass sie aus unterschiedlichen Materialien wie Aktivkohle, Zinkspänen, grobporiger Zeolith oder anderen Materialien bestehen können, wobei hier die jeweiligen Schichten jeweils verschiedene Korngrößen aufweisen. Dabei kann bevorzugt sein, ein gröberes Korn in den unteren Schichten vorzusehen und nach oben hin immer feinere Körner vorzusehen, um eine Klassierung der abgeschiedenen Partikel zu erreichen und in der feinsten Schicht ganz oben die kleinsten Schwebepartikel auffängt.

Das Wasser steigt dann weiter hoch und wird aufgrund des in dem als Luftstrahlpumpe ausgebildeten Auslassstutzens 228 herrschenden Unterdrucks durch das Saugrohr 229 in den Auslassstutzen 228 hineingezogen und verlässt gemeinsam mit der entwässerten Luft den Abscheider 200.

Von besonderer Bedeutung sind die kaskadenförmige Treppenstruktur, welche im Entwässerungsraum 221 durch die Blättchen 264 gebildet wird, sowie die Leitvorsprünge 262.

Durch die gezeigte Konstruktion des Abscheiders 200 gemäß dieser Ausführungsvariante wird in sehr vorteilhafter Weise erreicht, dass das Wasser durch das langsame Aufsteigen in die verschiedenen Schichten eine Ruhezone durchläuft und nicht in der Apparatur verwirbelt wird. Erst nach Durchlaufen der verschiedenen Schichten wird es dann an der Oberfläche durch das Saugrohr 229 abgesaugt. Darunter ist das Wasser aber in Ruhe, sodass die Sedimentation bzw. das Auffangen der Schwebepartikel hier optimal durchgeführt werden kann. Ein Mitreißen von Schwebepartikeln auch sehr kleiner Korngröße wird effektiv vermieden.

Das Gehäuse ist aus einem Kunststoff gefertigt und in mehreren Teilen einfach zusammengesteckt. So ist der Luftleiteinsatz 260 als separates Spritzgussteil ausgeführt und in einfacher Weise in den oberen Gehäuseteil 220 eingesteckt.

Wenn sich der Abscheider 200 im Einsatz mit Schwebepartikeln füllt, die üblicherweise aus Amalgam und sonstigen Stoffen aus der Zahnarztbehandlung bestehen, kann bei Erreichen der maximalen Kapazität das gesamte Gehäuse mit speziellen Schraubverschlüssen verschlossen und als Ganzes zur weiteren Aufarbeitung transportiert werden.

## Patentansprüche

1. Dentalabscheider (100, 200) mit einem Gehäuse, in dessen oberen Bereich eine Entwässerungszone (121, 221) zur Abtrennung von partikelhaltiger Flüssigkeit aus einem mit der Flüssigkeit beladenen Luftstrom ausgebildet ist, wobei das Gehäuse einen Einlass (122, 222) für den beladenen Luftstrom aufweist, der tangential in die Entwässerungszone mündet, und im Gehäuse unterhalb der Entwässerungszone eine Abscheidezone zur Abtrennung der Partikel aus der partikelhaltigen Flüssigkeit ausgebildet ist, die von der Entwässerungszone in die Abscheidezone sinkt, wobei die Entwässerungszone eine gekrümmte Strömungsbahn (125) umfasst, die an ihrer Unterseite durch einen Kranz an Prallblättchen (264) begrenzt ist,
**dadurch gekennzeichnet,**
**dass** an einer Wand, welche die äußere Begrenzung des Strömungskanals bildet, stegartige Leitvorsprünge (262) vorgesehen sind, die in den Strömungskanal ragen.

2. Dentalabscheider nach Anspruch 1, **dadurch gekennzeichnet, dass** die Prallblättchen (264) gleichmäßig und/oder alle auf derselben Höhe über die Erstreckung des Strömungskanals verteilt sind.

3. Dentalabscheider nach einem der vorhergehenden Ansprüche, **dadurch gekennzeichnet, dass** die Prallblättchen (264) im spitzen Winkel von vorzugsweise 10°-40° und weiter vorzugsweise 20°-30° in Strömungsrichtung nach oben aus der Horizontalen geneigt sind.

4. Dentalabscheider nach einem der vorhergehenden Ansprüche, **dadurch gekennzeichnet, dass** der in der Draufsicht erkennbare Abstand zwischen den Vorderkanten und Hinterkanten aufeinanderfolgender Prallblättchen (264) kleiner als die halbe umfängliche Erstreckung und vorzugsweise kleiner als ein Viertel der umfänglichen Erstreckung der Prallblättchen ist.

5. Dentalabscheider nach einem der vorhergehenden Ansprüche, **dadurch gekennzeichnet, dass** die Prallblättchen (264) radial von einer gekrümmten Wand innerhalb des Gehäuses abstehen, welche die Innenseite der Strömungsbahn definiert.

6. Dentalabscheider nach einem der vorhergehenden Ansprüche , **dadurch gekennzeichnet, dass** die unteren Enden der Leitvorsprünge an der Oberseite eines korrespondierenden Prallblättchens (264) anstehen.

7. Dentalabscheider nach Anspruch 6, **dadurch gekennzeichnet, dass** zwischen der Außenkante der Prallblättchen (264) und der Innenoberfläche der Wand, welche die äußere Begrenzung des Strömungskanals bildet, jeweils ein Spalt (266) ausgebildet ist, der sich in Abflussrichtung auf der Oberseite des Prallblättchens an den Berührungspunkt anschließt.

8. Dentalabscheider nach einem der vorhergehenden Ansprüche, **dadurch gekennzeichnet, dass** die Begrenzungswände des Strömungskanals nebst Prallblättchen (264) an einem Einsatz ausgebildet sind, der im Gehäuse und vorzugsweise im oberen Gehäuseteil aufgenommen ist.

9. Dentalabscheider nach einem der vorhergehenden Ansprüche, **dadurch gekennzeichnet, dass** unterhalb des Kranzes an Prallblättchen (264) eine Auffangzone vorgesehen ist, um das an den Prallkonturen aus dem Luftstrom abgeschiedene Wasser aufzufangen.

10. Dentalabscheider nach einem der vorhergehenden Ansprüche, **dadurch gekennzeichnet, dass** im Bodenbereich des Gehäuses eine Sedimentationszone (112, 212) ausgebildet ist, die nach oben hin durch einen Filter von einem Absaugbereich abgegrenzt ist.

11. Dentalabscheider nach einem der vorhergehenden Ansprüche, **dadurch gekennzeichnet, dass** das Gehäuse ferner einen Auslass (228) für den behandelten Luftstrom aufweist, der am distalen Ende der gekrümmten Strömungsbahn von der Entwässerungszone nach außen führt.

12. Dentalabscheider nach den Ansprüchen 10 und 11, **dadurch gekennzeichnet, dass** innerhalb des Auslasses eine Venturi-Düse mit einer Verengung ausgebildet ist, in welche ein aus dem Absaugbereich der Abscheidezone führendes Saugrohr (219) mündet.

## Claims

1. A dental debris separator (100, 200) having a housing in whose upper region a drainage zone (121, 221) is formed for separating liquid containing particles from an air flow charged with the liquid, wherein the housing has an inlet (122, 222) for the charged air flow that opens tangentially into the drainage zone and a separation zone is formed below the drainage zone in the housing for separating the particles from the liquid that contains particles and that drops comprises the drainage zone into the separation zone, wherein the drainage zone has a curved flow path (125) that is bounded by a ring of baffle plates (264) at its lower side,
**characterized in that**
web-like guide projections (262) that project into the flow channel are provided at a wall that forms the outer boundary of the flow channel.

2. A dental debris separator in accordance with claim 1, **characterized in that** the baffle plates (264) are distributed evenly and/or all at the same height over the extend of the flow channel.

3. A dental debris separator in accordance with one of the preceding claims, **characterized in that** the baffle plates (264) are inclined upwardly out of the horizontal at an acute angle of preferably 10° - 40° and further preferably 20° - 30° in the direction of flow.

4. A dental debris separator in accordance with one of the preceding claims, **characterized in that** the spacing between the front edges and the rear edges of consecutive baffle plates (264) that can be recognized in a plan view is smaller than half the circumferential extent and preferably smaller than a quarter of the peripheral extent of the baffle plates.

5. A dental debris separator in accordance with one of the preceding claims, **characterized in that** the baffle plates (264) project radially from a curved wall within the housing that defines the inner side of the flow path.

6. A dental debris separator in accordance with one of the preceding claims, **characterized in that** the lower ends of the guide projections abut the upper side of a corresponding baffle plate (264).

7. A dental debris separator in accordance with claim 6, **characterized in that** a respective gap (266) that adjoins the contact point in the drainage direction on the upper side of the baffle plate is formed between the outer edge of the baffle plates (264) and the inner surface of the wall that forms the outer boundary of the flow channel.

8. A dental debris separator in accordance with one of the preceding claims, **characterized in that** the boundary walls of the flow channel together with baffle plates (264) are formed at an insert that is received in the housing and preferably in the upper housing part.

9. A dental debris separator in accordance with one of the preceding claims, **characterized in that** a collection zone is provided below the ring of baffle plates (264) to collect the water separated from the air flow at the baffle contours.

10. A dental debris separator in accordance with one of the preceding claims, **characterized in that** a sedimentation zone (112, 212) that is upwardly delineated from a suction region by a filter is formed in the base region of the housing.

11. A dental debris separator in accordance with one of the preceding claims, **characterized in that** the housing furthermore has an outlet (228) for the treated air flow that leads from the drainage zone to the outside at the distal end of the curved flow path.

12. A dental debris separator in accordance with claims 10 and 11, **characterized in that** a Venturi nozzle is formed within the outlet and has a constriction into which a suction pipe (219) leading out of the suction region of the separation zone opens.

## Revendications

1. Séparateur dentaire (100, 200) comportant un boîtier, dans la zone supérieure duquel est réalisée une zone de drainage (121, 221) destinée à séparer un liquide contenant des particules d'un flux d'air chargé du liquide, le boîtier présentant une entrée (122, 222) pour le flux d'air chargé qui débouche de manière tangentielle dans la zone de drainage, et une zone de séparation pour séparer les particules du liquide contenant les particules étant réalisée dans le boîtier en dessous de la zone de drainage, ledit liquide descendant depuis la zone de drainage jusque dans la zone de séparation, la zone de drainage comprenant une voie d'écoulement incurvée (125), qui est limitée sur son côté inférieur par une couronne de lamelles déflectrices (264),
**caractérisé en ce que**
des saillies de guidage (262) de type nervures, qui se dressent dans le conduit d'écoulement, sont prévues sur une paroi qui forme la limite extérieure du conduit d'écoulement.

2. Séparateur dentaire selon la revendication 1, **caractérisé en ce que** les lamelles déflectrices (264) sont réparties de manière régulière et/ou toutes à la même hauteur sur l'étendue du conduit d'écoulement.

3. Séparateur dentaire selon l'une des revendications précédentes, **caractérisé en ce que** les lamelles déflectrices (264) sont inclinées dans la direction d'écoulement depuis l'horizontale vers le haut, selon un angle aigu de préférence de 10 à 40° et de préférence encore de 20 à 30°.

4. Séparateur dentaire selon l'une des revendications précédentes, **caractérisé en ce que** l'écart perceptible dans la vue de dessus entre les bords avant et les bords arrière de lamelles déflectrices (264) successives est inférieur à la moitié de l'étendue circonférentielle et de préférence inférieur à un quart de l'étendue circonférentielle des lamelles déflectrices.

5. Séparateur dentaire selon l'une des revendications précédentes, **caractérisé en ce que** les lamelles déflectrices (264) dépassent radialement depuis une paroi incurvée située à l'intérieur du boîtier, laquelle définit le côté intérieur de la voie d'écoulement.

6. Séparateur dentaire selon l'une des revendications précédentes, **caractérisé en ce que** les extrémités inférieures des saillies de guidage se trouvent adjacentes au côté supérieur d'une lamelle déflectrice (264) correspondante.

7. Séparateur dentaire selon la revendication 6, **caractérisé en ce qu'**un interstice (266) est respectivement formé entre le bord extérieur des lamelles déflectrices (264) et la surface intérieure de la paroi qui forme la limite extérieure du conduit d'écoulement, ledit interstice étant dans le prolongement du point de contact sur le côté supérieur des lamelles déflectrices dans la direction d'évacuation.

8. Séparateur dentaire selon l'une des revendications précédentes, **caractérisé en ce que** les parois de limitation du conduit d'écoulement ainsi que les lamelles déflectrices (264) sont réalisées sur un élément inséré qui est reçu dans le boîtier et de préférence dans la partie de boîtier supérieure.

9. Séparateur dentaire selon l'une des revendications précédentes, **caractérisé en ce qu'**une zone réceptrice est prévue en dessous de la couronne de lamelles déflectrices (264) pour recueillir l'eau séparée du flux d'air au niveau des contours de déflexion.

10. Séparateur dentaire selon l'une des revendications précédentes, **caractérisé en ce qu'**une zone de sédimentation (112, 212), qui est séparée vers le haut d'une zone d'aspiration par un filtre, est réalisée dans la zone de fond du boîtier.

11. Séparateur dentaire selon l'une des revendications précédentes, **caractérisé en ce que** le boîtier présente en outre une sortie (228) pour le flux d'air traité, qui conduit depuis la zone de drainage vers l'extérieur à l'extrémité distale de la voie d'écoulement incurvée.

12. Séparateur dentaire selon les revendications 10 et 11, **caractérisé en ce qu'**une buse Venturi avec un resserrement est réalisée à l'intérieur de la sortie, dans laquelle débouche un tuyau d'aspiration (219) conduisant hors de la zone d'aspiration de la zone de séparation.
